# EUROPEAN PATENT SPECIFICATION

(11) **EP 4 484 242 B1**
(45) Date of publication and mention of the grant of the patent: **10.09.2025**
(21) Application number: 23181829.5
(22) Date of filing: 27.06.2023
(51) Int. Cl.: B60W 40/08, B60W 50/14, B60W 60/00

(54) **METHOD FOR PREPARING A HUMAN DRIVER TO TAKE OVER CONTROL OF A VEHICLE FROM AN AUTONOMOUS DRIVING SYSTEM, DATA PROCESSING APPARATUS, COMPUTER PROGRAM, COMPUTER-READABLE STORAGE MEDIUM, AND VEHICLE**
VERFAHREN ZUM VORBEREITEN EINES MENSCHLICHEN FAHRERS AUF DIE ÜBERNAHME DER STEUERUNG EINES FAHRZEUGS VON EINEM AUTONOMEN FAHRSYSTEM, DATENVERARBEITUNGSVORRICHTUNG, COMPUTERPROGRAMM, COMPUTERLESBARES SPEICHERMEDIUM UND FAHRZEUG
PROCÉDÉ DE PRÉPARATION D'UN CONDUCTEUR HUMAIN POUR LE CONTRÔLE D'UN VÉHICULE À PARTIR D'UN SYSTÈME DE CONDUITE AUTONOME, APPAREIL DE TRAITEMENT DE DONNÉES

(43) Date of publication of application: 01.01.2025
(73) Proprietor: Volvo Car Corporation, 405 31 Göteborg (SE)
(72) Inventor: BLEY, Jessica, 40531 Göteborg (SE); JOHANSSON, Lisa, 40531 Göteborg (SE)
(74) Representative: Maiwald GmbH

(56) References cited:
- WO-A1-2020/257406
- US-A1- 2018 113 454
- US-A1- 2019 304 309
- US-A1- 2023 192 100

## Description

### TECHNICAL FIELD

The present invention relates to a method for preparing a human driver to take over control of a vehicle from an autonomous driving system.

The present invention is also directed to a data processing apparatus, a computer program, and a computer-readable storage medium.

Furthermore, the present invention relates to a vehicle.

### BACKGROUND ART

For every autonomous vehicle, i.e. for every vehicle that may be driven by an autonomous driving system, situations may occur in which a human driver needs to take over control of the vehicle. This means that the control of the vehicle needs to be transitioned from the autonomous driving system to the human driver.

Such a transition should be performed in a safe and smooth manner. This means that a traveling behavior of the vehicle should not change abruptly when transitioning control from the autonomous driving system to the human driver. This allows to safely operate both the vehicle subject to the transition of control and other vehicles present in the surroundings of the vehicle subject to the transition of control.

US 2018/0113454 A1 relates to a vehicle control device, a vehicle control method, and a vehicle control program for switching a level of self-driving automation. They are capable of switching a driving mode from a self-driving mode to a manual driving mode in a state that a driver is suitable for a driving operation.

US 2019/0304309 A1 discloses a driving assistance device comprising a ready determination unit which is configured to determine whether a user is ready for changing to a manual operation when changing of the driving mode from an automatic operation to the manual operation is approved by the user.

WO 2020/257406 A1 shows a monitoring system for determining driver readiness for takeover of vehicle control from an autonomous driving system.

US 2023/0192100 A1 discloses an apparatus including a control circuit. The control circuit may be configured to detect whether an attention state of a driver is in an attentive state or an inattentive state, assess whether the driver is sufficiently attentive and maintain an awareness of the driver to the environment of the vehicle by proactively interacting with the driver.

### SUMMARY

It is an objective of the present invention to enhance the transition of control from the autonomous driving system to the human driver.

The problem is at least partially solved or alleviated by the subject matter of the independent claims of the present invention, wherein further examples are incorporated in the dependent claims.

According to a first aspect, there is provided a method for preparing a human driver to take over control of a vehicle from an autonomous driving system. The method comprises:
- obtaining first data indicative of a state of the human driver and/or second data indicative of a current autonomous driving segment,
- causing a request to be provided to the human driver, wherein the request prompts a reaction of the human driver and wherein the request is based on the first data and/or on the second data,
- providing data indicative of a readiness of the driver for take-over of the control of the vehicle based on data generated by the human driver in reaction to the request.

Thus, the present method considers first data indicative of a state of the human driver and/or second data indicative of a current autonomous driving segment. Based thereon, a request is provided to the human driver which prompts a reaction of the human driver. This means that the request is a function of the first data and/or of the second data. In other words, the request is tailored to the state of the human driver and/or the current autonomous driving segment. In this context, the current autonomous driving segment is the time span or the distance for which the vehicle has been controlled by the autonomous driving system. The first data may be received from a driver monitoring system of the vehicle. The prompted reaction of the human driver causes the human driver to increase his or her situation awareness. This means that the human driver may be prompted to perceive elements in the environment of the vehicle and understand their meanings as well as a future status thereof. This leads to an enhanced driving performance when eventually taking over control of the vehicle. Altogether the driving safety for the vehicle and the human driver as well as the general safety of other vehicles is improved.

According to the invention, the request prompts the human driver to perceive an information available in the interior of the vehicle. The information relates to a current speed of the vehicle. This enhances the situation awareness of the human driver.

In the context of the present invention, obtaining means receiving or determining.

In an example, the request prompts the human driver to perceive a feature of an interior of the vehicle.

In an example, the method of the present invention may be triggered by receiving or determining a take-over indicator indicative of an upcoming need to transition control of the vehicle from the autonomous driving system to the human driver. Thus, the method of the present invention may be used in a situation where the autonomous driving system is not able anymore to control the vehicle.

One idea underlying the present invention is to introduce so-called friction into the interaction between the vehicle and the human driver before transitioning control from the autonomous driving system to the human driver or as part of a process of transitioning control from the autonomous driving system to the human driver. In contrast thereto, one usual aim is to design the interaction between the human driver and the vehicle to be seamless or frictionless. This means that a physical and mental effort of a human driver shall be comparatively low when interacting with the vehicle. However, according to the present idea, friction prompts a selectively increased physical and/or mental effort of the human driver. This friction introduced before transitioning control from the autonomous driving system to the human driver or as part of the process of transitioning control from the autonomous driving system to the human driver is used to increase the situation awareness of the human driver. As a consequence thereof, the driver is transitioned into a state in which he or she is physically and mentally prepared to take over control. This enhances the driving performance of the human driver when taking over control and, consequently, road safety.

According to an example, a safety procedure of the vehicle may be triggered if no reaction of the human driver is obtained at all or if it is determined that the reaction of the human driver is insufficient. The safety procedure may comprise triggering a warning activity. Additionally or alternatively, the safety procedure may comprise triggering a safety maneuver of the vehicle. The safety maneuver may comprise stopping the vehicle.

According to an example, the second data is indicative of how long the vehicle has been in an autonomous driving state. This may be measured in time or in distance. Especially if the vehicle has been in an autonomous driving state for a comparatively long time or a comparatively long distance, the human driver may have lost situation awareness to a comparatively large extent since the human driver may have been occupied with a non-driving related task. This effect may be bigger if the vehicle has been in an autonomous driving state for a longer time or distance. By considering this circumstance when causing the request to be provided to the human driver, the situation awareness of the human driver may be increased accordingly such that driving performance of the human driver is enhanced.

In an example, the first data is indicative of one or more of a body pose of the human driver, an object held by the human driver, or an eye status of the human driver. In this context, a body pose is indicative of an orientation of the human body and a location of the different body parts relative to one another. Example body poses include sitting straight, sitting with the upper body laid back and lying. An eye status may be indicative of the eyes of the human driver being open or closed. Additionally or alternatively, the eye status of the human driver may be indicative of a direction of gaze of the human driver. An object held by the human driver is for example a book, an electronic device such as a smart phone, a drink or a food item. Depending on the body pose, the object held by the human driver and/or the eye status, an appropriate request may be provided for the human driver such that the situation awareness is increased accordingly. Altogether, road safety is enhanced.

In an example, the data generated by the human driver in reaction to the request is received from a driver monitoring system and/or from a user interface. In the first alternative, the reaction of the human driver is detected by the driver monitoring system. This allows to detect the reaction precisely and reliably. In the second example the reaction of the human driver is detected directly since the reaction may comprise interacting with the user interface. The user interface may be touchable. Also in this case, the reaction may be determined in a precise and reliable manner.

According to an example, the method further comprises obtaining third data indicative of an environment around the vehicle, wherein the request is based on the third data indicative of the environment. In other words, the request prompting a reaction of the human driver is context dependent or dependent on the environment of the vehicle. The environment of the vehicle forms part of the situation in which the vehicle currently is and, thus, such a request increases the situational awareness of the driver, thereby enhancing road safety.

In an example, the first data comprises an indicator indicative of a driver readiness, wherein the request is based on the indicator. The indicator indicative of a driver readiness may describe a level of physical and/or cognitive readiness of the driver to take over control of the vehicle. This may for example be measured by one or more of an eye-gaze, a physical position, a head movement, or an interaction with in-car displays. Thus, the request based on the indicator is able to bring the readiness of the driver to a level appropriate for controlling the vehicle.

In an example, the request comprises a number of sub-requests, wherein each of the sub-requests prompts a respective reaction of the human driver and wherein the number of sub-requests is based on the first data and/or on the second data. Thus, depending on the driver state or on the length of the current autonomous driving segment, a number of sub-requests is determined. In other words, the number of sub-requests is variable. The number of sub-requests may be two or more. Thus, by providing the appropriate number of sub-requests, the situation awareness of the human driver may be brought to a level appropriate for taking over control of the vehicle.

According to an example, the method further comprises causing a driver seat to move into a driving position before causing the request to be provided to the human driver. More generally speaking, the human driver is physical put into a position in which he or she is ready to take over control of the vehicle. The driver seat may be automatically caused to move into a driving position. Optionally, moving the driver seat may be initiated by a button being operated by the human driver.

In an example, the request prompts the human driver to perform a physical activity. The physical activity may comprise looking into at least one rearview mirror. In this example, the physical activity may be checked with an eye tracking system which may form part of a driver monitoring system of the vehicle. Performing a physical activity enhances the readiness and/or the situation awareness of the human driver and, thus, increases safety when taking over control.

In an example, the request prompts the human driver to perceive a feature of a surrounding of the vehicle and/or an information available in the surroundings of the vehicle. In an example, the human driver is asked to determine a number of driving lanes being available for the vehicle. This enhances the situation awareness of the human driver.

In an example, the method further comprises triggering a safety maneuver and/or a transition of control to the human driver based on the data generated by the human driver in reaction to the request. Thus, depending on the reaction of the human driver, the vehicle may be caused to stop in the context of a safety maneuver. Otherwise, the control may be transitioned to the human driver. In all of these examples, the vehicle is kept in a safe state.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the present invention. Thus, using such a data processing apparatus, first data indicative of a state of the human driver and/or second data indicative of a current autonomous driving segment is considered. Based thereon, a request is provided to the human driver which prompts a reaction of the human driver. This means that the request is a function of the first data and/or of the second data. In other words, the request is tailored to the state of the human driver and/or the current autonomous driving segment. The first data may be received from a driver monitoring system of the vehicle. The prompted reaction of the human driver causes the human driver to increase his or her situation awareness. This means that the human driver is prompted to perceive elements in the environment of the vehicle and understand their meanings as well as future status. This leads to an enhanced driving performance when eventually taking over control of the vehicle. Altogether the driving safety for the vehicle and the human driver as well as the general safety of other vehicles is improved.

According to a third aspect, there is provided a computer program comprising instructions which, when the computer program is executed by a computer, cause the computer to carry out the method of the present invention. Thus, using such a computer program, first data indicative of a state of the human driver and/or second data indicative of a current autonomous driving segment is considered. Based thereon, a request is provided to the human driver which prompts a reaction of the human driver. This means that the request is a function of the first data and/or of the second data. In other words, the request is tailored to the state of the human driver and/or the current autonomous driving segment. The first data may be received from a driver monitoring system of the vehicle. The prompted reaction of the human driver causes the human driver to increase his or her situation awareness. This means that the human driver is prompted to perceive elements in the environment of the vehicle and understand their meanings as well as future status. This leads to an enhanced driving performance when eventually taking over control of the vehicle. Altogether the driving safety for the vehicle and the human driver as well as the general safety of other vehicles is improved.

According to a fourth aspect, there is provided a computer-readable storage medium comprising instructions which, when executed by a computer, cause the computer to carry out the method of the present invention. Thus, using such a computer-readable storage medium, first data indicative of a state of the human driver and/or second data indicative of a current autonomous driving segment is considered. Based thereon, a request is provided to the human driver which prompts a reaction of the human driver. This means that the request is a function of the first data and/or of the second data. In other words, the request is tailored to the state of the human driver and/or the current autonomous driving segment. The first data may be received from a driver monitoring system of the vehicle. The prompted reaction of the human driver causes the human driver to increase his or her situation awareness. This means that the human driver is prompted to perceive elements in the environment of the vehicle and understand their meanings as well as future status. This leads to an enhanced driving performance when eventually taking over control of the vehicle. Altogether the driving safety for the vehicle and the human driver as well as the general safety of other vehicles is improved.

According to a fifth aspect, there is provided a vehicle comprising a data processing apparatus according to the present invention. Thus, using such a vehicle, first data indicative of a state of the human driver and/or second data indicative of a current autonomous driving segment is considered. Based thereon, a request is provided to the human driver which prompts a reaction of the human driver. This means that the request is a function of the first data and/or of the second data. In other words, the request is tailored to the state of the human driver and/or the current autonomous driving segment. The first data may be received from a driver monitoring system of the vehicle. The prompted reaction of the human driver causes the human driver to increase his or her situation awareness. This means that the human driver is prompted to perceive elements in the environment of the vehicle and understand their meanings as well as future status. This leads to an enhanced driving performance when eventually taking over control of the vehicle. Altogether the driving safety for the vehicle and the human driver as well as the general safety of other vehicles is improved.

It should be noted that the above examples may be combined with each other irrespective of the aspect involved.

These and other aspects of the present invention will become apparent from and elucidated with reference to the examples described hereinafter.

### BRIEF DESCRIPTION OF DRAWINGS

Examples of the invention will be described in the following with reference to the following drawings.
- Figure 1: shows a vehicle according to the present invention, comprising a data processing apparatus according to the present invention, a computer-readable storage medium according to the present invention and a computer program according to the present invention, wherein the vehicle may execute a method according to the present invention for preparing a human driver to take over control from an autonomous driving system,
- Figure 2: shows a display unit of the vehicle of Figure 1 in detail, and
- Figure 3: illustrates steps of the method for preparing a human driver to take over control from an autonomous driving system.

### DETAILED DESCRIPTION

The Figures are merely schematic representations and serve only to illustrate examples of the invention. Identical or equivalent elements are in principle provided with the same reference signs.

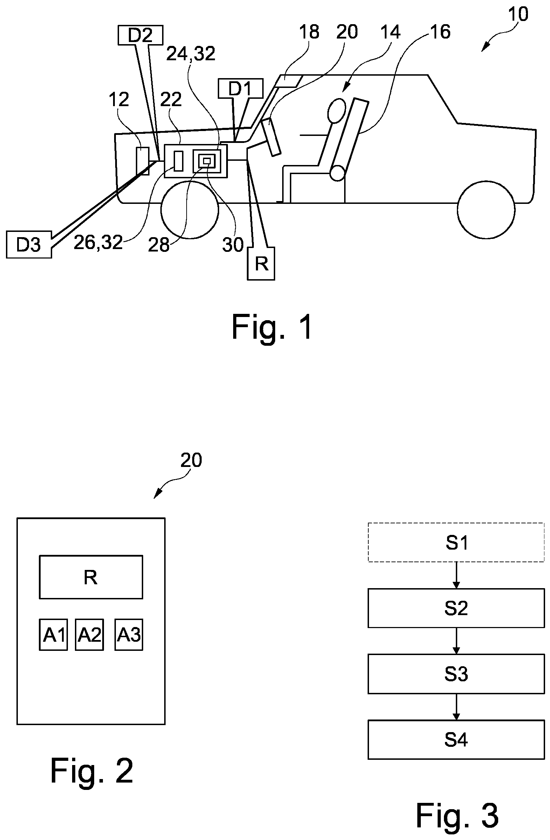

Figure 1 shows a vehicle 10.

The vehicle 10 is able to drive autonomously and therefore comprises an autonomous driving system 12 which is represented schematically only.

Alternatively, the vehicle 10 may be driven by a human driver 14 sitting on an electrically adjustable driver seat 16.

In its interior, the vehicle 10 comprises a driver monitoring system 18 which is configured to monitor the human driver 14 and a user interface in the form of a display unit 20 configured to display content to the human driver 14 and to receive input from the human driver 14 in the form of touching active surfaces of the display unit 20.

Moreover, the vehicle 10 comprises a data processing apparatus 22 which is communicatively connected to the autonomous driving system 12, the driver seat 16, the driver monitoring system 18 and the display unit 20.

The data processing apparatus 22 comprises a data storage unit 24 and a data processing unit 26.

The data storage unit 24 comprises a computer-readable storage medium 28.

On the computer-readable storage medium 28, there is provided a computer program 30.

The computer program 30 and, thus, also the computer-readable storage medium 28, comprise instructions which, when executed by the data processing unit 26, or, more generally speaking, a computer, cause the computer or the data processing unit 26 to carry out a method for preparing the human driver 14 to take over control of the vehicle 10 from the autonomous driving system 12.

Consequently, the data storage unit 24 and the data processing unit 26 form means 32 for carrying out the method for preparing the human driver 14 to take over control of the vehicle 10 from the autonomous driving system 12.

In the following, the method for preparing the human driver 14 to take over control of the vehicle 10 from the autonomous driving system 12 will be explained in detail.

The method is started, if the autonomous driving system 12 is controlling the vehicle 10 and determines an upcoming situation in which the human driver 14 needs to take over control of the vehicle 10.

Following this determination, the driver seat 16 is caused to move into a driving position in a first, optional step S1. The driving position of the driver seat 16 is characterized by an upright orientation of the backrest and in that a distance between a steering wheel of the vehicle 10 and the backrest is small enough that the human driver 14 is able to comfortably manipulate the steering wheel.

Obviously, the first step S1 is only performed if the driver seat 16 is outside the driving position.

Thereafter or simultaneously, first data D1 indicative of a state of the human driver 14, second data D2 indicative of a current autonomous driving segment and third data D3 indicative of an environment around the vehicle 10 are obtained in a second step S2.

In the present example, the first data D1 is received from the driver monitoring system 18 and is indicative of one or more of a body pose of the human driver 14, an object held by the human driver 14, or an eye status of the human driver 14. Moreover, the first data D1 comprises an indicator indicative of a driver readiness. In the present example, the driver readiness relates to a cognitive driver readiness which is essentially derived from the eye status of the human driver 14.

Moreover, the second data D2 is indicative of how long the vehicle 10 has been in an autonomous driving state. In the present example, the second data D2 is indicative of a time span. The second data D2 is received from the autonomous driving system 12.

Also the third data D3 is received from the autonomous driving system 12.

In the present example, the first data D1 indicates that the human driver 14 is in a laid-back body pose, has a smart phone in his or her hands and is looking on the smart phone. The cognitive readiness is found to be low.

The second data D2 indicates that the vehicle 10 has been driving autonomously for more than twenty minutes. The third data D3 indicates that the vehicle 10 is driving on a highway with two driving lanes oriented into the driving direction.

Subsequently, in a third step S3, the method causes a request R to be provided to the human driver 14. The request R prompts a reaction of the human driver 14.

Moreover, the request R is based on the first data D1, on the second data D2 and on the third data D3. In other words, the request R is a function of the first data D1, the second data D2 and the third data D3.

In the present example, the request R is determined to comprise three sub-requests. This means that the number of sub-requests is determined based on the first data D1, the second data D2 and the third data D3. Each of the sub-requests prompts a reaction of the human driver 14.

The first sub-requests prompts the human driver 14 to perform a physical activity. In the present example, the first sub-request asks the human driver to look into the left rearview mirror and into the right rearview mirror. This request R is displayed on the display unit 20 (see also Figure 2).

If the driver monitoring system 18 finds that the human driver 14 has effectively looked into both the left rearview mirror and the right rearview mirror, the second sub-request is issued to the human driver 14. As before, the request R is displayed on the display unit 20.

The second sub-request prompts to human driver 14 to perceive an information available in the interior of the vehicle 10. In line with claim 1, the human driver 14 is asked to determine the current speed of the vehicle 10.

Moreover, the human driver 14 is asked to input the current speed via the display unit 20. This may be done in that the human driver selects one out of several predefined alternative answers A1, A2, A3 (cf. Figure 2).

If the input answer is correct, a third sub-request prompts the human driver 14 to perceive an information available in the surroundings of the vehicle 10. In the present example, the human driver 14 is asked to determine a number of available driving lanes. Again, the request R is provided via the display unit 20.

As has been explained in connection with the second sub-request, the human driver 14 may input the determined number of driving lanes via the display unit 20.

The input of the human driver 14 may be cross-checked with the third data D3 provided by the autonomous driving system 12.

If the human driver 14 has answered all three sub-requests correctly within a predefined time span, the human driver 14 may be found to be ready to take over control of the vehicle 10. Consequently, data indicative of a readiness of the human driver 14 for take-over of the control of the vehicle 10 may be provided in a fourth step S4.

In the present example, this data is provided to both the display unit 20 which displays a corresponding message to the human driver 14 and the autonomous driving system 12.

Based thereon, the transitioning of the control to the human driver 14 may be started.

Alternatively, in a case in which the human driver 14 is not found to be ready to take over control and if at the same time the autonomous driving system 12 determines that autonomous driving is not possible anymore, a safety maneuver may be triggered.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: autonomous driving system
- 14: human driver
- 16: driver seat
- 18: driver monitoring system
- 20: user interface, display unit
- 22: data processing apparatus
- 24: data storage unit
- 26: data processing unit
- 28: computer-readable storage medium
- 30: computer program
- 32: means for carrying out a method for preparing a human driver to take over control of a vehicle from an autonomous driving system

- A1: predefined alternative answer
- A2: predefined alternative answer
- A3: predefined alternative answer
- D1: first data
- D2: second data
- D3: third data
- R: request
- S1: first step
- S2: second step
- S3: third step
- S4: fourth step

## Claims

1. A method for preparing a human driver (14) to take over control of a vehicle (10) from an autonomous driving system (12), the method comprising:
- obtaining first data (D1) indicative of a state of the human driver (14) and/or second data (D2) indicative of a current autonomous driving segment (S2),
- causing a request (R) to be provided to the human driver (14), wherein the request (R) prompts a reaction of the human driver (14), wherein the request (R) is based on the first data (D1) and/or on the second data (D2) (S3), and wherein the request (R) prompts the human driver (14) to perceive an information available in the interior of the vehicle (10),
- providing data indicative of a readiness of the human driver (14) for take-over of the control of the vehicle (10) based on data generated by the human driver (14) in reaction to the request (R) (S4),
the method being **characterized in that**:
- the information available in the interior of the vehicle (10) relates to a current speed of the vehicle (10).

2. The method of claim 1, wherein, if the second data (D2) is obtained and the request is based on the second data (D2), the second data (D2) is indicative of how long the vehicle (10) has been in an autonomous driving state.

3. The method of claim 1 or 2, wherein, if the first data (D1) is obtained and the request is based on the first data (D1), the first data (D1) is indicative of one or more of a body pose of the human driver (14), an object held by the human driver (14), or an eye status of the human driver (14).

4. The method of any of the preceding claims, wherein the data generated by the human driver (14) in reaction to the request (R) is received from a driver monitoring system (18) and/or from a user interface (20).

5. The method of any of the preceding claims, further comprising obtaining third data (D3) indicative of an environment around the vehicle (10), wherein the request (R) is based on the third data (D3) indicative of the environment (S2).

6. The method of any of the preceding claims, wherein, if the first data (D1) is obtained and the request is based on the first data (D1), the first data (D1) comprises an indicator indicative of a driver readiness, wherein the request (R) is based on the indicator.

7. The method of any of the preceding claims, wherein the request (R) comprises a number of sub-requests, wherein each of the sub-requests prompts a respective reaction of the human driver (14) and wherein the number of sub-requests is based on the first data (D1) and/or on the second data (D2).

8. The method of any of the preceding claims, further comprising causing a driver seat (16) to move into a driving position before causing the request (R) to be provided to the human driver (14) (S1).

9. The method of any of the preceding claims, wherein the request (R) prompts the human driver (14) to perform a physical activity.

10. The method of any of the preceding claims, wherein the request (R) prompts the human driver (14) to perceive a feature of surroundings of the vehicle (10) and/or an information available in the surroundings of the vehicle (10).

11. The method of any of the preceding claims, further comprising triggering a safety maneuver or a transition of control to the human driver (14) based on the data generated by the human driver (14) in reaction to the request (R).

12. A data processing apparatus (22) comprising means (32) for carrying out the method of any one of the preceding claims.

13. A computer program (30) comprising instructions which, when the computer program (30) is executed by a computer, cause the computer to carry out the method of claims 1 to 11.

14. A computer-readable storage medium (28) comprising instructions which, when executed by a computer, cause the computer to carry out the method of claims 1 to 11.

15. A vehicle (10) comprising a data processing apparatus (22) according to claim 12.

## Patentansprüche

1. Verfahren zum Vorbereiten eines menschlichen Fahrers (14) auf die Übernahme der Steuerung eines Fahrzeugs (10) von einem autonomen Fahrsystem (12), wobei das Verfahren umfasst:
- Erhalten erster Daten (D1), die einen Zustand des menschlichen Fahrers (14) angeben, und/oder zweiter Daten (D2), die ein momentanes autonomes Fahrsegment (S2) angeben,
- Veranlassen, dass eine Aufforderung (R) an den menschlichen Fahrer (14) übermittelt wird, wobei die Aufforderung (R) eine Reaktion des menschlichen Fahrers (14) verlangt, wobei die Aufforderung (R) auf den ersten Daten (D1) und/oder den zweiten Daten (D2) (S3) basiert, und wobei die Aufforderung (R) von dem menschlichen Fahrer (14) verlangt, eine im Innenraum des Fahrzeugs (10) verfügbare Information wahrzunehmen,
- Bereitstellen von Daten, die eine Bereitschaft des menschlichen Fahrers (14) zur Übernahme der Steuerung des Fahrzeugs (10) angeben, auf der Grundlage von Daten, die durch den menschlichen Fahrer (14) in Reaktion auf die Aufforderung (R) generiert werden (S4),
wobei das Verfahren **dadurch gekennzeichnet ist, dass**:
- sich die im Innenraum des Fahrzeugs (10) verfügbaren Informationen auf eine momentane Geschwindigkeit des Fahrzeugs (10) beziehen.

2. Verfahren nach Anspruch 1, wobei, falls die zweiten Daten (D2) erhalten werden und die Aufforderung auf den zweiten Daten (D2) basiert, die zweiten Daten (D2) angeben, wie lange sich das Fahrzeug (10) in einem autonomen Fahrzustand befunden hat.

3. Verfahren nach Anspruch 1 oder 2, wobei, falls die ersten Daten (D1) erhalten werden und die Aufforderung auf den ersten Daten (D1) basiert, die ersten Daten (D1) eines oder mehrere von einer Körperhaltung des menschlichen Fahrers (14), einem durch den menschlichen Fahrer (14) gehaltenen Objekt und einem Augenstatus des menschlichen Fahrers (14) angeben.

4. Verfahren nach einem der vorangehenden Ansprüche, wobei die durch den menschlichen Fahrer (14) in Reaktion auf die Aufforderung (R) generierten Daten von einem Fahrerüberwachungssystem (18) und/oder von einer Benutzerschnittstelle (20) empfangen werden.

5. Verfahren nach einem der vorangehenden Ansprüche, des Weiteren umfassend das Erhalten dritter Daten (D3), die eine Umgebung um das Fahrzeug (10) herum angeben, wobei die Aufforderung (R) auf den dritten Daten (D3) basiert, die die Umgebung angeben (S2).

6. Verfahren nach einem der vorangehenden Ansprüche, wobei, falls die ersten Daten (D1) erhalten werden und die Aufforderung auf den ersten Daten (D1) basiert, die ersten Daten (D1) einen Indikator umfassen, der eine Fahrerbereitschaft angibt, wobei die Aufforderung (R) auf dem Indikator basiert.

7. Verfahren nach einem der vorangehenden Ansprüche, wobei die Aufforderung (R) eine Anzahl von Unter-Aufforderungen umfasst, wobei jede der Unter-Aufforderungen eine jeweilige Reaktion des menschlichen Fahrers (14) verlangt, und wobei die Anzahl von Unter-Aufforderungen auf den ersten Daten (D1) und/oder den zweiten Daten (D2) basiert.

8. Verfahren nach einem der vorangehenden Ansprüche, des Weiteren umfassend das Veranlassen, dass ein Fahrersitz (16) in eine Fahrposition bewegt wird, bevor veranlasst wird, die Aufforderung (R) an den menschlichen Fahrer (14) zu übermitteln (S1).

9. Verfahren nach einem der vorangehenden Ansprüche, wobei die Aufforderung (R) von dem menschlichen Fahrer (14) verlangt, eine physische Aktivität durchzuführen.

10. Verfahren nach einem der vorangehenden Ansprüche, wobei die Aufforderung (R) von dem menschlichen Fahrer (14) verlangt, ein Merkmal einer Umgebung des Fahrzeugs (10) und/oder eine in der Umgebung des Fahrzeugs (10) verfügbare Information wahrzunehmen.

11. Verfahren nach einem der vorangehenden Ansprüche, des Weiteren umfassend das Auslösen eines Sicherheitsmanövers oder eines Übergangs der Steuerung an den menschlichen Fahrer (14) auf der Grundlage der Daten, die durch den menschlichen Fahrer (14) in Reaktion auf die Aufforderung (R) generiert werden.

12. Datenverarbeitungsvorrichtung (22), umfassend Mittel (32) zum Ausführen des Verfahrens nach einem der vorangehenden Ansprüche.

13. Computerprogramm (30), umfassend Instruktionen, die, wenn das Computerprogramm (30) durch einen Computer ausgeführt wird, den Computer veranlassen, das Verfahren nach den Ansprüchen 1 bis 11 auszuführen.

14. Computerlesbares Speichermedium (28), umfassend Instruktionen, die, wenn sie durch einen Computer ausgeführt werden, den Computer veranlassen, das Verfahren nach den Ansprüchen 1 bis 11 auszuführen.

15. Fahrzeug (10), umfassend eine Datenverarbeitungsvorrichtung (22) nach Anspruch 12.

## Revendications

1. Procédé pour préparer un conducteur humain (14) à reprendre le contrôle d'un véhicule (10) à partir d'un système de conduite autonome (12), le procédé consistant à :
- obtenir des premières données (D1) indiquant un état du conducteur humain (14) et/ou des deuxièmes données (D2) indiquant un segment de conduite autonome actuel (S2),
- envoyer une demande (R) au conducteur humain (14), la demande (R) suscitant une réaction du conducteur humain (14), la demande (R) étant basée sur les premières données (D1) et/ou sur les deuxièmes données (D2) (S3), et la demande (R) incitant le conducteur humain (14) à percevoir une information disponible à l'intérieur du véhicule (10),
- fournir des données indiquant que le conducteur humain (14) est préparé à reprendre le contrôle du véhicule (10) sur la base de données générées par le conducteur humain (14) en réaction à la demande (R) (S4),
le procédé étant **caractérisé en ce que** :
- les informations disponibles à l'intérieur du véhicule (10) sont relatives à la vitesse actuelle du véhicule (10).

2. Procédé selon la revendication 1, dans lequel, si les deuxièmes données (D2) sont obtenues et que la demande est basée sur les deuxièmes données (D2), les deuxièmes données (D2) indiquent depuis combien de temps le véhicule (10) se trouve dans un état de conduite autonome.

3. Procédé selon la revendication 1 ou 2, dans lequel, si les premières données (D1) sont obtenues et que la demande est basée sur les premières données (D1), les premières données (D1) indiquent un ou plusieurs parmi une posture du conducteur humain (14), un objet tenu par le conducteur humain (14) ou un état des yeux du conducteur humain (14).

4. Procédé selon l'une quelconque des revendications précédentes, dans lequel les données générées par le conducteur humain (14) en réaction à la demande (R) sont reçues d'un système de surveillance du conducteur (18) et/ou d'une interface utilisateur (20).

5. Procédé selon l'une quelconque des revendications précédentes, consistant en outre à obtenir des troisièmes données (D3) indicatives d'un environnement autour du véhicule (10), la demande (R) étant basée sur les troisièmes données (D3) indicatives de l'environnement (S2).

6. Procédé selon l'une quelconque des revendications précédentes, dans lequel, si les premières données (D1) sont obtenues et que la demande est basée sur les premières données (D1), les premières données (D1) comprennent un indicateur indiquant un état de préparation du conducteur, la demande (R) étant basée sur l'indicateur.

7. Procédé selon l'une quelconque des revendications précédentes, dans lequel la demande (R) comprend un certain nombre de sous-demandes, chacune des sous-demandes suscitant une réaction respective du conducteur humain (14) et le nombre de sous-demandes étant basé sur les premières données (D1) et/ou sur les deuxièmes données (D2).

8. Procédé selon l'une quelconque des revendications précédentes, consistant en outre à déplacer un siège conducteur (16) en position de conduite avant que la demande (R) soit transmise au conducteur humain (14) (S1).

9. Procédé selon l'une quelconque des revendications précédentes, dans lequel la demande (R) incite le conducteur humain (14) à effectuer une activité physique.

10. Procédé selon l'une quelconque des revendications précédentes, dans lequel la demande (R) incite le conducteur humain (14) à percevoir une caractéristique de l'environnement du véhicule (10) et/ou une information disponible dans l'environnement du véhicule (10).

11. Procédé selon l'une quelconque des revendications précédentes, consistant en outre à déclencher une manœuvre de sécurité ou un transfert de contrôle au conducteur humain (14) sur la base des données générées par le conducteur humain (14) en réaction à la demande (R).

12. Appareil de traitement de données (22) comprenant des moyens (32) pour mettre en œuvre le procédé selon l'une quelconque des revendications précédentes.

13. Programme d'ordinateur (30) comprenant des instructions qui, lorsque le programme d'ordinateur (30) est exécuté par un ordinateur, amènent l'ordinateur à mettre en œuvre le procédé selon les revendications 1 à 11.

14. Support de stockage lisible par ordinateur (28) comprenant des instructions qui, lorsqu'elles sont exécutées par un ordinateur, amènent l'ordinateur à mettre en œuvre le procédé selon les revendications 1 à 11.

15. Véhicule (10) comprenant un appareil de traitement de données (22) selon la revendication 12.
